# EUROPÄISCHE PATENTSCHRIFT

(11) **EP 1 949 034 B1**
(45) Veröffentlichungstag und Bekanntmachung des Hinweises auf die Patenterteilung: **05.06.2019**
(21) Anmeldenummer: 06818476.1
(22) Anmeldetag: 10.11.2006
(51) Int. Cl.: G01D 3/08

(54) **INTEGRIERTER ELEKTRONISCHER SCHALTKREIS**
INTEGRATED ELECTRONIC CIRCUIT
CIRCUIT ELECTRONIQUE INTEGRE

(30) Priorität: 11.11.2005 DE 102005054257; 16.01.2006 DE 102006002221
(43) Veröffentlichungstag der Anmeldung: 30.07.2008
(73) Patentinhaber: TDK-Micronas GmbH, 79108 Freiburg (DE); DENSO CORPORATION, Kariya-shi, Aichi-ken, 448-8661 (JP)
(72) Erfinder: FINK, Hans-Jörg, 79108 Freiburg (DE); BAYER, Martin, 79279 Vörstetten (DE); BIDENBACH, Reiner, 79279 Vörstetten (DE); KONO, Yoshiyuki, Aichi-Ken, 448-8661 (JP)
(74) Vertreter: Koch Müller Patentanwaltsgesellschaft mbH
(86) Internationale Anmeldenummer: PCT/EP2006/010811
(87) Internationale Veröffentlichungsnummer: WO 2007/054344

(56) Entgegenhaltungen:
- EP-A- 0 479 525
- DE-A1- 10 130 183

## Beschreibung

Die Erfindung betrifft einen integrierten elektronischen Schaltkreis, mit einer Kernschaltung, die ein Nutzsignal erzeugt.

Das von der Kernschaltung erzeugte Nutzsignal kann in dem integrierten Schaltkreis in anderen Schaltungen weiterverarbeitet oder ausgegeben werden. Eine Störung in der Stromversorgung, z.B. ein Spannungseinbruch, eine Unterbrechung oder eine Überspannung wirkt sich auch auf das Nutzsignal in unerwünschter Weise aus. Dadurch ist auch die Weiterverarbeitung oder die Ausgabe des Signals beeinträchtigt. Ziel der Erfindung ist es, die Verarbeitungsfähigkeit des Nutzsignals zu gewährleisten. Die Erfindung schafft einen integrierten elektronischen Schaltkreis, bei dem bei einer Störung in der Stromversorgung die Auswirkungen auf das Nutzsignal minimiert sind.

Dies wird durch die Merkmale des Anspruchs 1 erreicht.

Das Nutzsignal wird im Normalbetrieb, also wenn keine Störung in der Stromversorgung vorliegt, im Zwischenspeicher laufend gespeichert und von diesem kann es wiederum anderen Schaltungen im integrierten Schaltkreis zur Verfügung gestellt werden. Tritt eine Störung auf, die sich insbesondere auf das Nutzsignal auswirkt, dann wird statt auf das gestörte Nutzsignal auf den zuletzt eingelesenen Wert des Nutzsignals im Zwischenspeicher zurückgegriffen. Wegen der Entkopplung von der Stromversorgung der anderen Schaltungen ist der Zwischenspeicher von der Störung nicht betroffen und bewahrt den vor der Störung eingelesenen Wert während der Dauer der Störung. Ohne diese Entkopplung würde sich im Zwischenspeicher ein zufällig entstehender Wert einstellen, der bei der Weiterverarbeitung des Nutzsignals zu unvorhersehbaren Ergebnissen führen könnte. Die Bereitstellung des zuletzt eingelesenen Wert des Nutzsignals im Zwischenspeicher gewährleistet insgesamt ein Nutzsignal mit minimalen Sprüngen, was die Signalverarbeitung in anderen Schaltungen des integrierten Schaltkreises oder in externen Schaltungen, die mit dem Nutzsignal versorgt werden, erheblich erleichtert.

Gemäß einer vorteilhaften Ausführungsform der Erfindung speichert der Zwischenspeicher den zuletzt eingelesenen Wert des Nutzsignals so lange und stellt diesen so lange zur Verfügung, bis gewährleistet ist, dass wieder gültige Werte in den Zwischenspeicher eingelesenen werden.

Abhängig von der Gestaltung der Kernschaltung kann es sein, dass diese nicht in der Lage ist, unmittelbar nach der Störung der Stromversorgung wieder gültige Werte auszugeben. Beispielsweise wenn die Kernschaltung nach der Störung einen Rücksetzvorgang (Reset) durchläuft. In diesem Fall kann es eine bestimmte Zeit dauern, bis von der Kernschaltung wieder ein sinnvolles Nutzsignal ausgegeben wird. Während dieser Zeit gibt die Kernschaltung beispielsweise ein Signal aus, dessen Wert nahe 0V oder nahe der Versorgungsspannung liegt. Durch die Erfindung wird dieser Zeitraum überbrückt, indem der Zwischenspeicher den zuletzt eingelesenen Wert des Nutzsignals zur Verfügung stellt.

Gemäß einer vorteilhaften Weiterbildung der Erfindung bildet der integrierte elektronische Schaltkreis einen aktiven Sensor, bei dem die Kernschaltung eine Messschaltung ist, die als Nutzsignal ein Messsignal erzeugt. Ein derartiger Sensor bietet eine hohe Zuverlässigkeit, da die Auswirkungen von Störungen in der Stromversorgung auf das Messsignal minimiert sind. Insbesondere kann ein derartiger Sensor auch unmittelbar nach Störungen in der Stromversorgung ein definiertes Ausgangssignal liefern. Die hohe Zuverlässigkeit ist beispielsweise beim Einsatz von Sensoren im Fahrzeugbau von besonderer Bedeutung, wo Sensoren zahlreichen Störungen, etwa von Zündanlagen ausgesetzt sein können.

Gemäß noch einer vorteilhaften Weiterbildung der Erfindung ist der Sensor ein Weg- oder Winkelsensor ist. Der erfindungsgemäße aktive Weg- oder Winkelsensor kann mechanisch-elektrische Weg- oder Winkelsensoren, z.B. Potentiometer ersetzen und bietet die Vorteile einer längeren Lebensdauer, höheren Zuverlässigkeit und geringeren Empfindlichkeit gegen Verschmutzung, ohne dass diese Vorteile mit einer gegenüber den mechanisch-elektrischen Sensoren erhöhten Empfindlichkeit gegen Störungen in der Stromversorgung erkauft werden müsste.

Weitere Merkmale der Erfindung und ihre Vorteile ergeben sich aus den Unteransprüchen und aus der nachfolgenden Beschreibung einer bevorzugten Ausführungsform.

Die Ausführungsform umfasst einen integrierten Schaltkreis, der einen aktiven Weg- oder Winkelsensor bildet, mit einer Messschaltung, einem Zwischenspeicher und mit einer Ausgangsschaltung. Der integrierte Schaltkreis enthält weiterhin eine Stromversorgung und eine Steuereinheit. Außerdem kann der integrierte Schaltkreis weitere Einheiten enthalten, die für das Verständnis der Erfindung nicht wesentlich sind.

Die Messschaltung erzeugt ein Messsignal, das einem gemessenen Weg oder Winkel entspricht. Das Messsignal wird im Zwischenspeicher gespeichert und steht der Ausgangsschaltung zur Verfügung. Diese kann das Messsignal auslesen, gegebenenfalls weiterverarbeiten und ein von dem Messsignal abhängiges Ausgangssignal ausgeben.

Die Stromversorgung versorgt die Messschaltung, die Steuerschaltung und die Ausgangsschaltung mit der erforderlichen Energie. Der Zwischenspeicher ist über ein Entkopplungselement an die Stromversorgung angeschlossen und durch ein integriertes Speicherelement gepuffert, sodass der Zwischenspeicher von Störungen in der Stromversorgung entkoppelt ist. Durch das integrierte Speicherelement sind besonders vorteilhaft keine externen Bauelemente, wie Kondensatoren zur Pufferung erforderlich. Die Entkopplung kann insbesondere so ausgebildet sein, dass sie außerdem eine Beeinträchtigung des Zwischenspeichers bei einer störungsverursachten Umpolung der Stromversorgung, d.h. bei einer kurzzeitigen negativen Versorgungsspannung V_{DD} verhindert.

Die Steuerschaltung überwacht die Stromversorgung und steuert den Zwischenspeicher. Solange die Stromversorgung in Ordnung ist, d.h. die Versorgungsspannung V_{DD} sich in einem Bereich befindet, in dem die versorgten Schaltungen, ordnungsgemäß arbeiten, insbesondere die Messschaltung ein sinnvolles Messsignal liefert, steuert die Steuereinheit den Zwischenspeicher so, dass er das Messsignal einliest und der Ausgangsschaltung zur Verfügung stellt.

Eine Störung der Stromversorgung, beispielsweise durch einen Einbruch in der Versorgungsspannung V_{DD}, hat zur Folge, daß der Zwischenspeicher das Einlesen des Messsignals aussetzt. Im einfachsten Fall wird das durch den Ausfall der Steuereinheit und die damit fehlende Ansteuerung des Zwischenspeichers veranlasst. Da der Zwischenspeicher über eine eigene Stromversorgung verfügt, ist er von der Störung nicht betroffen, sodass keine unsinnigen, beispielsweise zufällig erzeugten, Werte in den Zwischenspeicher gelangen können, sondern der letzte gültige Wert des Messsignals erhalten bleibt.

Die Steuereinheit sorgt dafür, dass nach der Störung, wenn die Stromversorgung wieder in Ordnung ist, der vor der Störung gespeicherte Wert im Zwischenspeicher für einen bestimmten Zeitraum weiter zur Verfügung steht, damit von der Ausgangsschaltung auch direkt nach der Störung ein Ausgangssignal mit einem definierten Wert ausgegeben werden kann. Wenn die Störung kurz gegenüber der Änderungsgeschwindigkeit des Messsignals ist, dann schließt das Ausgangssignal nach der Störung ohne große Abweichung an den Verlauf vor der Störung an. Damit enthält das Ausgangssignal lediglich eine durch die Störung der Stromversorgung verursachte unvermeidliche Störung. Eine längere Abweichung des Messsignals, die dadurch verursacht sein kann, dass die Messschaltung durch die Störung in der Stromversorgung in ihrer Funktion gestört ist, kann somit im Ausgangssignal überbrückt werden.

In einer Ausführungsform der Erfindung wird nach jeder Störung der integrierte Schaltkreis zurückgesetzt. In dieser Zeit liefert die Messschaltung nicht das gewünschte Messsignal, sondern das Messsignal nimmt einen bestimmten, aber unerwünschten Wert, beispielsweise den maximal- oder minimal möglichen Wert, den die Messschaltung liefern kann, an. In diesem Fall ist vorteilhafterweise der obengenannte Zeitraum, in dem der vor der Störung gespeicherte Wert im Zwischenspeicher weiter zur Verfügung steht, mindestens so lang, daß er die Dauer des Zurücksetzens einschließt.

Auch in diesem Fall schließt der vor der Störung gespeicherte Wert in den meisten Fällen besser an das nach dem Zurücksetzen wieder gelieferte Messsignal an, als ein beim Zurücksetzen von der Messschaltung gelieferter Maximal- oder Minimalwert. Daher ergibt sich insgesamt ein Ausgangssignal mit minimalen Sprüngen, was die Signalverarbeitung in nachfolgenden Schaltungen erheblich vereinfacht.

Der integrierte Schaltkreis kann beispielsweise ein Hall-Sensor sein, wobei die Meßschaltung den eigentlichen Sensorteil enthält und die Meßwerte vom Sensor in das Meßsignal umsetzt. Durch die Erfindung ist gewährleistet, daß der Sensor nach einer Störung für einen bestimmten Zeitraum einen definierten Meßwert, nämlich den letzten vor der Störung ermittelten, annimmt. Auf diese Weise liefert der Sensor ein Meßsignal, das minimale Stufen aufweist.

Die Erfindung ist auf Sensoren mit analoger oder digitaler Signalverarbeitung anwendbar, wobei unwesentlich ist, welche Abschnitte des Signalweges analog und welche digital sind.

## Patentansprüche

1. Integrierter elektronischer Schaltkreis, mit
- einer Messschaltung zur Erzeugung eines Messsignals als Nutzsignal,
- einem Zwischenspeicher zur Speicherung des Nutzsignals,
- einer Steuereinheit zur Überwachung einer Stromversorgung und zur Steuerung des Zwischenspeichers,
- einer Ausgangsschaltung zur Ausgabe des in dem Zwischenspeicher gespeicherten Werts des Nutzsignals als Ausgangssignal, wobei der Zwischenspeicher das zwischenspeicherte Nutzsignal der Ausgangsschaltung zur Verfügung stellt,
das Nutzsignal im Normalbetrieb, wenn keine Störung in der Stromversorgung vorliegt, im Zwischenspeicher laufend gespeichert ist,
- einer Stromversorgung zur Versorgung der Messschaltung, der Steuereinheit und der Ausgangsschaltung,
- eine eigene Stromversorgung für den Zwischenspeicher,
- wobei der Zwischenspeicher bei einer Störung in der Stromversorgung den zuletzt eingelesenen Wert des Nutzsignals für einen vorbestimmten Zeitraum speichert,
**dadurch gekennzeichnet, dass**
der Zwischenspeicher über ein Entkopplungselement an die Stromversorgung angeschlossen ist und
- der Zwischenspeicher ein integriertes Speicherelement zur Pufferung aufweist,
so dass der Zwischenspeicher von Störungen in der Stromversorgung entkoppelt ist,
wobei die Steuereinheit dazu ausgelegt ist, eine Störung der Stromversorgung zu erfassen und das Beschreiben des Zwischenspeichers mit neuen Nutzsignalen während einer Störung der Stromversorgung zu unterbinden.

2. Integrierter elektronischer Schaltkreis nach Anspruch 1, bei dem der Zwischenspeicher den zuletzt eingelesenen Wert wenigstens solange speichert, bis gewährleistet ist, dass wieder gültige Werte in den Zwischenspeicher eingelesen werden.

3. Integrierter elektronischer Schaltkreis nach Anspruch 2, bei dem der Sensor ein Weg- oder Winkelsensor ist.

## Claims

1. Integrated electronic circuit comprising
- a measuring circuit for generating a measurement signal as use signal,
- an intermediate store for storage of the use signal,
- a control unit for monitoring a current supply and controlling the intermediate store,
- an output circuit for output of the value, which is stored in the intermediate store, of the use signal as output signal, wherein the intermediate store makes available the intermediately stored use signal of the output circuit, the use signal in normal operation being continuously stored in the intermediate store when there is no disruption in the current supply,
- a current supply for supplying the measuring circuit, the control unit and the output circuit,
- an individual current supply for the intermediate store,
- wherein the intermediate store in the case of disruption in the current supply stores the value, which was last read in, of the use signal for a predetermined period of time,
**characterised in that**
the intermediate store is connected with the current supply by way of a decoupling element and
- the intermediate store comprises an integrated storage element for buffering, so that the intermediate store is decoupled from disruptions in the current supply,
wherein the control unit is designed for the purpose of detecting a disruption of the current supply and for preventing writing into the intermediate store of new use signals during a disruption of the current supply.

2. Integrated electronic circuit according to claim 1, in which the intermediate store stores the value, which was last read in, at least until it is ensured that further valid values are read into the intermediate store.

3. Integrated electronic circuit according to claim 2, in which the sensor is a travel or angle sensor.

## Revendications

1. Circuit électronique intégré, avec
- un circuit de mesure pour produire un signal de mesure comme signal utile,
- une mémoire intermédiaire pour stocker le signal utile,
- une unité de commande pour surveiller une alimentation électrique et pour commander la mémoire intermédiaire,
- un circuit de sortie pour émettre la valeur du signal utile stockée dans la mémoire intermédiaire comme signal de sortie, dans lequel la mémoire intermédiaire fournit le signal utile stocké provisoirement au circuit de sortie, le signal utile est stocké en continu dans la mémoire intermédiaire en fonctionnement normal, lorsqu'il n'y a aucune perturbation dans l'alimentation électrique,
- une alimentation électrique pour alimenter le circuit de mesure, l'unité de commande et le circuit de sortie,
- une alimentation électrique propre pour la mémoire intermédiaire,
- dans lequel la mémoire intermédiaire stocke la valeur du signal utile lue en dernier lieu pendant un temps prédéterminé en cas de perturbation dans l'alimentation électrique,
**caractérisé en ce que**
- la mémoire intermédiaire est raccordée à l'alimentation électrique par un élément de découplage et
- la mémoire intermédiaire présente un élément de mémoire intégré pour le stockage,
de telle manière que la mémoire intermédiaire soit découplée de perturbations dans l'alimentation électrique,
dans lequel l'unité de commande est conçue pour détecter une perturbation de l'alimentation électrique et pour empêcher l'écriture de nouveaux signaux utiles dans la mémoire intermédiaire pendant une perturbation de l'alimentation électrique.

2. Circuit électronique intégré selon la revendication 1, dans lequel la mémoire intermédiaire stocke la valeur lue en dernier lieu, au moins jusqu'à ce qu'il soit garanti que des valeurs valides sont de nouveau lues dans la mémoire intermédiaire.

3. Circuit électronique intégré selon la revendication 2, dans lequel le capteur est un capteur de course ou un capteur d'angle.
